# EUROPÄISCHE PATENTSCHRIFT

(11) **EP 4 422 391 B1**
(45) Veröffentlichungstag und Bekanntmachung des Hinweises auf die Patenterteilung: **15.04.2026**
(21) Anmeldenummer: 23700490.8
(22) Anmeldetag: 09.01.2023
(51) Int. Cl.: A01K 61/00

(54) **ANLAGE ZUR AUFZUCHT AQUATISCHER LEBEWESEN, SALZZUSAMMENSETZUNG, SALZ- ODER BRACKWASSER FÜR EINE SOLCHE ANLAGE**
INSTALLATION FOR BREEDING AQUATIC ORGANISMS, SALT COMPOSITION, AND SALTWATER OR BRACKISH WATER FOR SUCH AN INSTALLATION
INSTALLATION POUR L'ÉLEVAGE D'ORGANISMES AQUATIQUES, COMPOSITION DE SEL ET EAU SALÉE OU SAUMÂTRE POUR UNE TELLE INSTALLATION

(30) Priorität: 10.01.2022 LU 501230
(43) Veröffentlichungstag der Anmeldung: 04.09.2024
(73) Patentinhaber: Infinitesea GmbH, 66333 Völklingen (DE)
(72) Erfinder: MÄCK, Andreas, 66740 Saarlouis (DE)
(74) Vertreter: Zeiner, Johannes Michael
(86) Internationale Anmeldenummer: PCT/EP2023/050304
(87) Internationale Veröffentlichungsnummer: WO 2023/131703

(56) Entgegenhaltungen:
- CN-C- 1 321 913
- JP-A- 2006 006 150
- JP-A- 2006 307 205
- US-A1- 2005 193 956
- SOWERS ET AL: "Hemolymph osmolality and cation concentrations in Litopenaeus vannamei during exposure to artificial sea salt or a mixed-ion solution: Relationship to potassium flux", COMPARATIVE BIOCHEMISTRY AND PHYSIOLOGY. PART A, MOLECULAR AND INTEGRATIVE PHYSIOLOGY, ELSEVIER SCIENCE, NEW YORK, NY, US, vol. 145, no. 2, 20 September 2006 (2006-09-20), pages 176 - 180, XP022015697, ISSN: 1095-6433, DOI: 10.1016/J.CBPA.2006.06.008
- OSTROFF A G AND METLER A V: "Solubility of Calcium Sulfate Dihydrate in the System NaCI-MgCl2-H20 from 28�to 70�C", JOURNAL OF CHEMICAL AND ENGINEERING DATA, vol. 11, no. 3, 1 July 1966 (1966-07-01), pages 346 - 350, XP093258653, Retrieved from the Internet <URL:https://pubs.acs.org/doi/epdf/10.1021/je60030a016?ref=article_openPDF>

## Beschreibung

Die Erfindung betrifft eine Anlage zur Aufzucht aquatischer Lebewesen, insbesondere von Fischen oder Krustentieren, die ein Aufzuchtbecken mit Salz- oder Brackwasser aufweist, wobei das Salz- oder Brackwasser durch eine Salzzusammensetzung hergestellt ist, die zwischen 70 Mol-% und 99,9 Mol-% Natriumchlorid (NaCl) und zwischen 0,1 Mol-% und 30 Mol-% Magnesiumchlorid (MgCl₂) jeweils bezogen auf die Gesamtstoffmenge der Salzzusammensetzung enthält. Ferner betrifft die Erfindung eine Salzzusammensetzung zur Herstellung von Brack- oder Salzwasser für eine solche Anlage, Brack- oder Salzwasser sowie ein Verfahren Herstellung des Brack- oder Salzwassers.

CN 1321913 C beschreibt eine Salzzusammensetzung als künstliches Seewasseradditiv, beispielsweise für die Fischzucht, sowie ein Verfahren zu dessen Herstellung. Aus CN 1321913 C ist eine sulfatarme Salzzusammensetzung bekannt. Eine sulfatfreie Zusammensetzung wird hingegen nicht beschrieben.

JP 2006006150 A beschreibt Salzzusammensetzungen, die zur Aufzucht von Shrimps verwendet werden können. Aus Absatz [0017] ist eine Zusammensetzung bekannt, die 85 mol-% NaCl, 6,5 mol-% MgCl₂, 3,2 mol-% MgSO₄ und 1,9 mol-% CaSO₄ enthält. Somit wird eine eine sulfatarme Salzzusammensetzung beschrieben, jedoch keine sulfatfreie.

Aus Sowers et. al "Hemolymph osmolality and cation concentrations in Litopenaeus vannamei during exposure to artificial sea salt or a mixed-ion solution: Relationship to potassium flux"; Comparative Biochemistry and Physiology, Part A: Molecular and Integrative Physiology, Elsevier, Bd. 145, Nº 2, 20. September 2006, S. 176-180, ist eine sulfatfreie Salzzusammensetzung zur Aufzucht von Krustentieren in einem Aquarium bekannt.

Aus dem Stand der Technik ist Aquakultur zur Aufzucht aquatischer Lebewesen wie Fischen, Muscheln oder Krebsen bekannt. Dabei werden in bestehenden Gewässern üblicherweise abgetrennte Teiche, Fließrinnen, Becken oder Netzgehege verwendet, in denen die Lebewesen bis zur sogenannten Ernte aufwachsen. Insbesondere in Küstenregionen wird meist die Haltung in Netzgehegen betrieben, da hierbei auf bestehendes Salz- oder Brackwasser zurückgegriffen werden kann.

Als eine Form der Aquakultur ist Aquafarming in Binnenland in sogenannten Kreislaufanlagen mit Aufzuchtbecken bekannt. Zur Herstellung des hierfür verwendeten salzhaltigen Wassers, das beispielsweise künstliches Meerwasser sein kann , in dem die aquatischen Lebewesen bis zu Ernte in den Aufzuchtbecken aufgezogen werden, wird üblicherweise aus Meerwasser gewonnenes Meersalz in Leitungs-, Grund- oder Oberflächen gelöst, um einen für die zu züchtenden Tiere typischen Lebensraum zu schaffen. Dieses künstliche Meerwasser weist üblicherweise einen hohen Sulfatgehalt auf.

Während bei Aquakulturanlagen in fließenden Gewässern oder Fjorden eine Reinigung des Zuchtwassers von Exkrementen und Futterresten meist nicht stattfindet und der Austausch des Wassers durch ein Durchströmen der Aufzuchtkörbe erfolgt, sind bei Kreislaufanlagen mehrere Filterstufen zur Reinigung von Wasser der Aufzuchtbecken erforderlich. Trotz permanenter Filtration und Wasserumwälzung kann sich am Boden der Aufzuchtbecken, lokal in Bereichen wie Ecken oder in Wasserfiltereinrichtungen eine 1 bis 4 mm dicke Schicht, das sogenannte Sediment, bilden, welches aus Futterresten und Exkrementen der aquatischen Lebewesen besteht, und in dem sich Mikroorganismen ansiedeln. In das Sediment kann Sauerstoff lediglich wenige µm tief eindringen, da der Sauerstoff direkt für mikrobielle Abbauprozesse gezehrt wird. Typisch sind Eindringtiefen zwischen 20 und 100 µm, abhängig von verschiedenen Parametern.

Der Erfinder hat erkannt, dass in dem Sediment lebende Mikroorganismen Sulfat anstelle von Sauerstoff als Elektronenakzeptor für deren Stoffwechsel nutzen, wodurch Schwefelwasserstoff (H₂S) gebildet und in das Wasser des Aufzuchtbeckens abgegeben wird. Dadurch kann lokal im Bereich des Sediments eine für die aquatischen Lebewesen tödliche H₂S-Konzentration erreicht werden, die zu einem Ernteausfall, das heißt einem Absterben der aquatischen Lebewesen, die sich auch nur kurzzeitig in diesem Bereich aufhalten, führen kann. Besonders empfindlich für Schwefelwasserstoff sind sämtliche in Aquakultur gezüchtete Fische, insbesondere der Atlantische Lachs (*Salmo salar*), der Yellowtail Kingfish (*Seriola lalandi*) sowie die Regenbogenforelle (*Onchorrynchis mykiss*)*.* Bei Krustentieren sind insbesondere die White Tiger Garnelen (*Litopenaeus vannamei*) sowie die Black Tiger Garnelen (*Panaeus monodon*) betroffen.

Der Erfinder hat außerdem erkannt, dass dieses Problem durch sulfatfreies Brack- oder Salzwasser gelöst wird, und dass bis zu einer bestimmten Sulfatkonzentration keine Gefahr für die aquatischen Lebewesen besteht, das heißt lediglich eine für die aquatischen Lebewesen unschädliche Menge an H₂S im Sediment gebildet wird.

Gleichzeitig wird eine Salzzusammensetzung geschaffen, durch die Brack- oder Salzwasserherstellbar ist, in dem sich die aquatischen Lebewesen besonders gut entwickeln und mit allen zur Aufzucht erforderlichen Ionen in ausreichender Menge versorgt werden. Dadurch wird sichergestellt, dass die zur wirtschaftlichen Zucht erforderlichen Wachstumsraten erreicht werden.

Der Erfindung liegt die Aufgabe zugrunde, eine Brack- oder Salzwasser aufweisende Anlage zur Aufzucht aquatischer Lebewesen der eingangs genannten Art zu schaffen, in der keine Freigabe von Schwefelwasserstsoff in ein Aufzuchtbecken der Anlage erfolgt oder lediglich in einer für die aquatischen Lebewesen unschädlichen Menge.

Erfindungsgemäß wird die Aufgabe dadurch gelöst, dass die Salzzusammensetzung zwischen 0,20 Mol-% und 0,31 Mol-% Natriumbicarbonat (NaHCO₃) bezogen auf die Gesamtstoffmenge der Salzzusammensetzung enthält.

Natriumbicarbonat wird auch als Natriumhydrogencarbonat bezeichnet.

Natriumbicarbonat ist zwar in Wasser schlechter löslich als Natriumcarbonat, ist jedoch wesentlich einfacher zu lagern. Während Natriumcarbonat stark hygroskopisch ist und entweder luftdicht verschlossen oder in trockener Atmosphäre gelagert werden muss, kann Natriumbicarbonat beispielsweise ohne wesentliche Veränderung seiner Eigenschaften in luftdurchlässigen Säcken gelagert werden. Vorteilhaft ist dies bei langen Transportwegen zu einer Aufzuchtanlage oder bei langen Lagerungszeiten in der Aufzuchtanlage, eine on-time Anlieferung ist nicht erforderlich.

Denkbar ist, dass Natriumbicarbonat zur Herstellung einer Salzzusammensetzung verwendet wird, die eine besonders genaue Einstellung eines pH-Wertes des daraus hergestellten Salz- oder Brackwassers, mit dem eine erfindungsgemäße Aufzuchtanlage betrieben wird, erfordert.

Eine sulfatfreie Salzzusammensetzung weist überhaupt kein Sulfat auf, während eine sulfatarme Salzzusammensetzung bezogen auf die Gesamtstoffmenge der Salzzusammensetzung maximal 5 Mol-% eines Sulfats aufweist, vorzugsweise bestehen die maximal 5 Mol-% Sulfat aus Magnesiumsulfat.

Es ist denkbar, dass das Sulfat aus Lösung von Natrium- und/oder Kaliumsulfat stammt.

Denkbar ist außerdem die Verwendung von Mischungen verschiedener Sulfatsalze.

Vorteilhaft wird sichergestellt, dass für ein besonders gutes Wachstum der aquatischen Lebewesen erforderliche Ionen in mit der erfindungsgemäßen Salzzusammensetzung hergestelltem Brack- oder Salzwasser in ausreichender Menge vorhanden sind.

Eine sulfatfreie bzw. sulfatarme Salzzusammensetzung wird insbesondere dadurch erreicht, dass ein Chloridsalz, beispielsweise Magnesiumchlorid, als Ersatzstoff für ein Sulfatsalz, beispielsweise Magnesiumsulfat, verwendet wird. Es wird bei der erfindungsgemäßen Salzzusammensetzung stets ein Sulfatsalz durch ein Chloridsalz ersetzt. Vorteilhaft können durch diese Substitution die lonenverhältnisse, insbesondere die Kationenverhältnisse, des herzustellenden künstlichen Salz- oder Brackwassers, beispielsweise Magnesium zu Kalzium oder Magnesium zu Kalium, vorteilhaft denjenigen von Wasser des natürlichen Lebensraums der aquatischen Lebewesen entsprechen.

Es versteht sich, dass Natriumchlorid als Ersatzstoff für Natriumsulfat verwendbar ist.

Erfindungsgemäßes Brack- oder Salzwasser ist entsprechend der Salzzusammensetzung, die zu dessen Herstellung verwendet wird, sulfatfrei oder zumindest sulftatarm.

Zweckmäßigerweise enthält die Salzzusammensetzung Kaliumchlorid (KCI), vorzugsweise weniger als 5 Mol-% bezogen auf die Gesamtstoffmenge der Salzzusammensetzung, insbesondere zwischen 0,5 Mol-% und 4,0 Mol-%, besonders bevorzugt zwischen 1,5 Mol-% und 2,25 Mol-%.

In einer Ausgestaltung der Erfindung enthält die Salzzusammensetzung Kalziumchlorid (CaCl₂), vorzugsweise weniger als 5 Mol-% bezogen auf die Gesamtstoffmenge der Salzzusammensetzung, insbesondere zwischen 0,5 Mol-% und 4 Mol-%, besonders bevorzugt zwischen 1,50 Mol-% und 2,25 Mol-%. Kalzium- und Chloridionen sind zum Wachstum der aquatischen Lebewesen unbedingt erforderlich. Kalziumchlorid ist besonders gut in Wasser löslich, so dass ein Aufzuchtbecken vorteilhaft schneller zur Aufzucht verwendbar ist als bei Verwendung einer anderen Kalziumquelle. Stillstandszeiten werden dadurch verringert, ein Produktivitätszuwachs ist möglich.

Der Erfinder hat erkannt, dass für eine sulfatfreie oder sulfatarme Salzzusammensetzung ein Sulfatsalz durch ein Chloridsalz ersetzbar ist, wobei für die Aufzucht der aquatischen Lebewesen erforderliche lonenverhältnisse in einer mit erfindungsgemäßem Salz- oder Brackwasser betriebenen Aufzuchtanlage, beispielsweise ein lonenverhältnis von Magnesiumionen zu Kalziumionen oder Magnesiumionen zu Kaliumionen, vorteilhaft denjenigen von Wasser des natürlichen Lebensraums der aquatischen Lebewesen entsprechen oder zumindest sehr ähnlich sind.

In einer weiteren Ausgestaltung der Erfindung enthält die Salzzusammensetzung Natriumcarbonat (Na₂CO₃), vorzugsweise bis zu 0,5 Mol-% bezogen auf die Gesamtstoffmenge der Salzzusammensetzung, insbesondere zwischen 0,01 Mol-% und 0,15 Mol-%, besonders bevorzugt 0,065 Mol-%. Natriumcarbonat hat eine wesentlich höhere Löslichkeit in Wasser als Natriumbicarbonat, das aus dem Stand der Technik als Carbonatlieferant zur Herstellung von Salz- oder Brackwasser für Aufzuchtanlagen bekannt ist. Durch die höhere Löslichkeit steht die Aufzuchtanlage nach einem Wechsel des Salz- oder Brackwassers, mit dem die Aufzuchtanlage betrieben wird, schneller zur weiteren Aufzucht von aquatischen Lebewesen zur Verfügung. Stillstandszeiten werden verringert.

Eine sulfatarme Salzzusammensetzung enthält beispielsweise bis zu 5 Mol-% Sulfat (SO₄²⁻). Als Sulfat eignet sich beispielsweise ein Sulfat ausgewählt aus der Gruppe bestehend aus Natriumsulfat, Magnesiumsulfat, Kaliumsulfat und Kalziumsulfat, bevorzugt ausgewählt aus der Gruppe bestehend aus Natriumsulfat und Magnesiumsulfat.

In einer Ausführungsform enthält eine sulfatarme Salzzusammensetzung bis zu 5 mol-% Natriumsulfat (Na₂SO₄), in einer weiteren Ausführungsform enthält eine sulfatarme Salzzusammensetzung bis zu 5 mol-% Magnesiumsulfat (MgSO₄), jeweils bezogen auf die Gesamtstoffmenge der Salzzusammensetzung.

Der Erfinder hat erkannt, dass bei einer sulfatarmen Salzzusammensetzung Natriumsulfat ohne negativen Einfluss auf das Wachstum der aquatischen Lebewesen durch Magnesiumsulfat ersetzbar ist. Dadurch, dass Natriumsulfat teurer ist als Magnesiumsulfat, wird vorteilhaft eine besonders kostengünstige Salzzusammensetzung geschaffen. Eine erfindungsgemäße Aufzuchtanlage ist besonders wirtschaftlich betreibbar.

Als vorteilhaft hat sich bei einer sulfatarmen Salzzusammensetzung ein Magnesiumsulfatanteil von 4,28 Mol-% bezogen auf die Gesamtstoffmenge der Salzzusammensetzung herausgestellt. Dadurch werden optimale Ernteergebnisse erzielt, d.h. ein schnelles Wachstum bei einer geringen Verlustrate durch vor Erntebeginn absterbende aquatische Lebewesen.

In einer Ausgestaltung der Erfindung enthält eine sulfatfreie Salzzusammensetzung zwischen 7,5 Mol-% und 12 Mol-% Magnesiumchlorid (MgCl₂) bezogen auf die Gesamtstoffmenge der Salzzusammensetzung, vorzugsweise zwischen 9,0 und 10,0 Mol-%. Dieser Anteil hat sich als besonders vorteilhaft erwiesen, um das für den Stoffwechsel der aquatischen Lebewesen optimale lonenverhältnis Magnesium zu Kalzium sowie Magnesium zu Kalium in dem Brack- oder Salzwasser der Aufzuchtanlage zu erreichen. Diese genannten lonenverhältnisse sind für ein optimales Wachstum der aquatischen Lebewesen sehr relevant. Vorteilhaft wird eine besonders effiziente Aufzuchtanlage geschaffen.

In einer weiteren Ausgestaltung der Erfindung enthält eine sulfatarme Salzzusammensetzung zwischen 4,0 Mol-% und 7,0 Mol-% Magnesiumchlorid (MgCl₂) bezogen auf die Gesamtstoffmenge der Salzzusammensetzung, vorzugsweise zwischen 5,0 und 6,0 Mol-%. Dieser Anteil hat sich als besonders vorteilhaft erwiesen, um das für den Stoffwechsel der aquatischen Lebewesen optimale Kationenverhältnis Magnesium zu Kalzium sowie Magnesium zu Kalium in dem Brack- oder Salzwasser der Aufzuchtanlage zu erreichen.

In einer Ausgestaltung der Erfindung ist die Salzzusammensetzung magnesiumsulfatfrei oder magnesiumsulfatarm. Vorteilhaft wird eine Salzzusammensetzung geschaffen, die gegenüber derjenigen zur Herstellung von künstlichem Salzwasser gar kein Sulfat aufweist, oder lediglich einen geringen Anteil, der durch Magnesiumsulfateinbringung erreicht wird. Eine solche erfindungsgemäße Salzzusammensetzung ist synthetisch und nicht durch Trocknung von Meerwasser herstellbar.

Zweckmäßigerweise enthält eine erfindungsgemäße sulfatarme oder sulfatfreie Salzzusammensetzung zur Herstellung von Brack- oder Salzwasser für eine Anlage zur Aufzucht aquatischer Lebewesen, insbesondere zur Aufzucht von Fischen oder Krustentieren, zwischen 70 Mol-% und 99,9 Mol-% Natriumchlorid (NaCl) und zwischen 0,1 Mol-% und 30 Mol-% Magnesiumchlorid (MgCl₂) jeweils bezogen auf die Gesamtstoffmenge der Salzzusammensetzung.

Es versteht sich von selbst, dass sich die Mol-% der in der Salzzusammensetzung enthaltenen Salze auf deren Mol-% vor der Herstellung von Brack- oder Salzwasser beziehen. Dem Fachmann ist klar, dass sich die Mol-% bei der Herstellung des Brack- oder Salzwassers ändern können.

Die Salinität von erfindungsgemäßem Brack- oder Salzwasser, das mit einer erfindungsgemäßen Salzzusammensetzung hergestellt ist, beträgt zwischen 0,10 % und 5,0 %, vorzugsweise zwischen 2,5 % und 3,5%. Eine Salinität von 2,5 % bis 3,5 % ist besonders zur Aufzucht von Meerestieren geeignet.

Bei der Angabe einer Salinität beziehen sich die Prozentangaben auf den Masseanteil des Salzes in dem Wasser. Beispielsweise bedeutet eine Salinität von 1,0 %, dass zur Herstellung des Salzwassers 10 g Salz in 1 kg Wasser eingebracht werden.

Brackwasser weist eine Salinität zwischen 0,1 % und 1,0 % auf, während Salzwasser eine Salinität von mehr als 1,0 % aufweist. Meerwasser kann eine Salinität von 3,0 % bis 3,5 % aufweisen.

Bei einem erfindungsgemäßen Verfahren zur Herstellung von Brack- oder Salzwasser für eine Anlage zur Aufzucht von aquatischen Lebewesen mit einer für die Aufzucht erforderlichen Salinität wird eine Salzzusammensetzung in Süßwasser eingebracht, insbesondere in Leitungs-, Grund- oder Oberflächenwasser beispielsweise aus Seen. Dessen lonenanteil ist gegenüber demjenigen lonenanteil, den das erfindungsgemäße Brack- oder Salzwasser aufweisen soll, vernachlässigbar.

Ein aquatisches Lebewesen, welches in einer erfindungsgemäßen Aufzuchtanlage aufgezogen wurde, unterscheidet sich von aus dem Technik bekannten aquatischen Lebewesen dadurch, dass anhand der Nierenaktivität der aquatischen Lebewesens feststellbar ist, ob die aquatischen Lebewesen in sulfatfreiem oder sulfatarmem Salz- oder Brackwasser aufgezogen wurden. In aquatischen Lebewesen nachweisbares Sulfat wird beispielsweise durch Verstoffwechselung von Futter, welches Aminosäuren enthält, oder durch Aufnahme aus dem Salz- oder Brackwasser, in dem die aquatischen Lebewesen aufgezogen werden, gebildet. So konnte der Erfinder nachweisen, dass aquatische Lebewesen, deren natürlicher Lebensraum Salzwasser ist, und die in einer erfindungsgemäßen mit sulfatarmem oder sulfatfreiem Salzwasser betriebenen Aufzuchtanlge aufgezogen wurden, eine geringere Nierenaktivität aufwiesen als vergleichbare, im natürlichen Lebensraum aufgezogene aquatische Lebewesen.

Bei toten aquatischen Lebewesen ist durch Untersuchung der Nieren feststellbar, ob diese in sulfatarmem oder sulfatfreiem Salz- oder Brackwasser aufgezogen wurden.

Es versteht sich, dass sulfatarmes und sulfatfreies Wasser solches Salz- oder Brackwasser ist, mit dem die Aufzuchtanlage betrieben wird, und das mit einer sulfatarmen bzw. sulfatfreien Salzzusammensetzung hergestellt wurde.

Eine aus dem Stand der Technik bekannte Salzzusammensetzung zur Herstellung von künstlichem Meerwasser zum Betrieb einer Aquakulturanlage weist in nachfolgender Tabelle 1 gezeigte Stoffmengenanteile bezogen auf die Gesamtstoffmenge der Salzzusammensetzung auf:

**Tabelle 1: Aus dem Stand der Technik bekannte Salzzusammensetzung zur Herstellung von künstlichem Salzwasser**

| Chemische Verbindung | Stoffmengenanteil (Mol-%) |
|---|---|
| Natriumchlorid | 88,06 |
| Magnesiumchlorid | 1,50 |
| Magnesiumsulfat | 7,00 |
| Kalziumchlorid | 1,63 |
| Kaliumchlorid | 1,52 |
| Natriumbicarbonat | 0,25 |
| Natriumcarbonat | 0,04 |

Bei Brack- oder Salzwasser einer Aufzuchtanlage, welches mit dieser Zusammensetzung (7 Mol-% Magnesiumsulfat) hergestellt wird, besteht ein hohes Ernteausfallrisiko - bis zu 2% - durch Bildung von Schwefelwasserstoff im Bereich des Sediments.

Die Erfindung wird nachfolgend anhand von Ausführungsbeispielen näher erläutert.

### Beispiel 1:

Eine erfindungsgemäße sulfatarme Salzzusammensetzung weist eine Zusammensetzung gemäß nachfolgender Tabelle 2.1 auf:

**Tabelle 2.1: Erfindungsgemäße sulfatarme Salzzusammensetzung**

| Chemische Verbindung | Stoffmengenanteil (Mol-%) |
|---|---|
| Natriumchlorid | 86,09 |
| Magnesiumchlorid | 5,51 |
| Magnesiumsulfat | 4,28 |
| Kalziumchlorid | 1,90 |
| Kaliumchlorid | 1,87 |
| Natriumbicarbonat | 0,30 |
| Natriumcarbonat | 0,06 |

Salzwasser mit einer Salinität von 3,0 %, das mit einer Salzzusammensetzung nach Tabelle 2.1 hergestellt ist, weist eine Ionenkonzentration gemäß nachfolgender Tabelle 2.2 auf:

**Tabelle 2.2: Sulfatarmes Salzwasser mit einer Salinität von 3,0 %**

| Ion | Konzentration (mol/l) | Stoffmengenanteil (Mol-%) |
|---|---|---|
| Natrium (Na⁺) | 0,41 | 42,83 |
| Chlorid (Cl⁻) | 0,47 | 48,17 |
| Magnesium (Mg²⁺) | 0,05 | 4,84 |
| Sulfat (SO₄²⁻) | 0,02 | 2,12 |
| Kalzium (Ca²⁺) | 0,01 | 0,94 |
| Kalium (K⁺) | 0,01 | 0,92 |
| Bicarbonat (HCO³⁻) | 0,0014 | 0,15 |
| Carbonat (CO₃²⁻) | 0,00025 | 0,03 |

### Beispiel 2:

Eine erfindungsgemäße sulfatfreie Salzzusammensetzung weist eine Zusammensetzung gemäß nachfolgender Tabelle 3.1 auf:

**Tabelle 3.1: Erfindungsgemäße sulfatfreie Salzzusammensetzung Seite 9/12**

| Chemische Verbindung | Stoffmengenanteil (Mol-%) |
|---|---|
| Natriumchlorid | 86,46 |
| Magnesiumchlorid | 9,52 |
| Magnesiumsulfat | 0,0 |
| Kalziumchlorid | 1,85 |
| Kaliumchlorid | 1,82 |
| Natriumbicarbonat | 0,29 |
| Natriumcarbonat | 0,06 |

Dadurch, dass zur Aufzucht von aquatischen Lebewesen ein bestimmter Anteil Magnesium erforderlich ist, wird das Weglassen von Magnesiumsulfat durch eine Erhöhung des Anteils an Magnesiumchlorid ausgeglichen, d.h. Magnesiumsulfat wird durch Magnesiumchlorid ersetzt.

Durch die Zusammensetzung nach Beispiel 2 ist Brack- oder Salzwasser für eine Aufzuchtanlage herstellbar, dessen aquatische Lebewesen eine Wachstumskurve aufweisen wie diejenigen, die in Brack- oder Salzwasser gezüchtet werden, die durch eine Zusammensetzung nach Beispiel 1 herstellbar ist, und in der nahezu kein Ernteverlust - weniger als 0,5 % - durch aus dem sogenannten Sediment austretenden Schwefelwasserstoff auftritt.

Salzwasser mit einer Salinität von 3,0 %, das mit einer Salzzusammensetzung nach Tabelle 3.1 hergestellt ist, weist eine Ionenkonzentration gemäß nachfolgender Tabelle 3.2 auf:

**Tabelle 3.2: Erfindungsgemäßes sulfatfreies Salzwasser mit einer Salinität von 3,0 %**

| Ion | Konzentration (mol/I) | Stoffmengenanteil (Mol-%) |
|---|---|---|
| Natrium (Na⁺) | 0,43 | 43,01 |
| Chlorid (Cl⁻) | 0,51 | 50,29 |
| Magnesium (Mg²⁺) | 0,05 | 4,72 |
| Sulfat (SO₄²⁻) | 0 | 0 |
| Kalzium (Ca²⁺) | 0,01 | 0,92 |
| Kalium (K⁺) | 0,01 | 0,91 |
| Bicarbonat (HCO³⁻) | 0,00136 | 0,13 |
| Carbonat (CO₃²⁻) | 0,00024 | 0,02 |

### Beispiel 3:

Eine weitere erfindungsgemäße sulfatfreie Salzzusammensetzung weist eine Zusammensetzung gemäß nachfolgender Tabelle 4.1 auf:

**Tabelle 4.1: Eine sulfatfreie Salzzusammensetzung ohne Natriumbicarbonat**

| Chemische Verbindung | Stoffmengenanteil (Mol-%) |
|---|---|
| Natriumchlorid | 86,51 |
| Magnesiumchlorid | 9,53 |
| Magnesiumsulfat | 0,00 |
| Kalziumchlorid | 1,86 |
| Kaliumchlorid | 1,84 |
| Natriumbicarbonat | 0,00 |
| Natriumcarbonat | 0,26 |

Durch die Zusammensetzung nach Beispiel 3 ist Brack- oder Salzwasser für eine Aufzuchtanlage herstellbar, dessen aquatische Lebewesen eine Wachstumskurve aufweisen wie diejenigen, die in Brack- oder Salzwasser gezüchtet werden, das durch eine Zusammensetzung nach Beispiel 1 der 2 herstellbar ist, und in der nahezu kein Ernteverlust - weniger als 0,5 % - durch aus dem sogenannten Sediment austretenden Schwefelwasserstoff auftritt.

Die Zusammensetzung nach Beispiel 3 hat den Vorteil, dass durch die hohe Löslichkeit von Natriumcarbonat und das Weglassen von Natriumbicarbonat eine um mehrere Stunden kürzere Stillstandszeit der Aufzuchtanlage bei einem Wasserwechsel möglich war.

Salzwasser mit einer Salinität von 3,0 %, das mit einer Salzzusammensetzung nach Tabelle 4.1 hergestellt ist, weist eine Ionenkonzentration gemäß nachfolgender Tabelle 4.2 auf:

**Tabelle 4.2: Erfindungsgemäßes sulfatfreies und bicarbonatfreies Salzwasser mit einer Salinität von 3,0 %**

| Ion | Konzentration (mol/I) | Stoffmengenanteil (Mol-%) |
|---|---|---|
| Natrium (Na⁺) | 0,44 | 43,06 |
| Chlorid (Cl⁻) | 0,51 | 50,26 |
| Magnesium (Mg²⁺) | 0,05 | 4,72 |
| Sulfat (SO₄²⁻) | 0,00 | 0,00 |
| Kalzium (Ca²⁺) | 0,01 | 0,92 |
| Kalium (K⁺) | 0,01 | 0,91 |
| Bicarbonat (HCO³⁻) | 0,00 | 0,00 |
| Carbonat (CO₃²⁻) | 0,00132 | 0,13 |

Es versteht sich, dass die Erfindung nicht auf diese Beispiele beschränkt ist. Insbesondere ist denkbar, dass erfindungsgemäßes Brack- oder Salzwasser einer andere als die genannte Salinität aufweist, beispielsweise 0,75 % oder 3,5 %.

Ferner ist denkbar, dass ein anderes Sulfatsalz als Magnesiumsulfat zur Herstellung eines sulfatarmen Salz- oder Brackwassers verwendet wird, beispielsweise Natrium- oder Kaliumsulfat.

## Patentansprüche

1. Anlage zur Aufzucht aquatischer Lebewesen, insbesondere von Fischen oder Krustentieren, die ein Aufzuchtbecken mit Salz- oder Brackwasser aufweist, wobei das Salz- oder Brackwasser durch eine Salzzusammensetzung hergestellt ist, die zwischen 70 Mol-% und 99,9 Mol-% Natriumchlorid (NaCl) und zwischen 0,1 Mol-% und 30 Mol-% Magnesiumchlorid (MgCl₂) jeweils bezogen auf die Gesamtstoffmenge der Salzzusammensetzung enthält, wobei die Salzzusammensetzung sulfatfrei oder zumindest sulfatarm ist,
**dadurch gekennzeichnet,**
**dass** die Salzzusammensetzung zwischen 0,20 Mol-% und 0,31 Mol-% Natriumbicarbonat (NaHCO₃) bezogen auf die Gesamtstoffmenge der Salzzusammensetzung enthält.

2. Aufzuchtanlage nach Anspruch 1,
**dadurch gekennzeichnet,**
**dass** die Salzzusammensetzung Kaliumchlorid (KCI) enthält, vorzugsweise weniger als 5 Mol-% bezogen auf die Gesamtstoffmenge der Salzzusammensetzung, insbesondere zwischen 0,5 Mol-% und 4,0 Mol-%, besonders bevorzugt zwischen 1,5 Mol-% und 2,25 Mol-%.

3. Aufzuchtanlage nach Anspruch 1 oder 2,
**dadurch gekennzeichnet,**
**dass** die Salzzusammensetzung Kalziumchlorid (CaCl₂) enthält, vorzugsweise weniger als 5 Mol-% bezogen auf die Gesamtstoffmenge der Salzzusammensetzung, insbesondere zwischen 0,5 Mol-% und 4 Mol-%, besonders bevorzugt zwischen 1,50 Mol-% und 2,25 Mol-%.

4. Aufzuchtanlage nach einem der Ansprüche 1 bis 3,
**dadurch gekennzeichnet,**
**dass** die Salzzusammensetzung Natriumcarbonat (Na₂CO₃) enthält, vorzugsweise bis zu 0,5 Mol-% bezogen auf die Gesamtstoffmenge der Salzzusammensetzung, insbesondere zwischen 0,01 Mol-% und 0,15 Mol-%, besonders bevorzugt 0,065 Mol-%.

5. Aufzuchtanlage nach einem der Ansprüche 1 bis 4,
**dadurch gekennzeichnet,**
**dass** eine sulfatarme Salzzusammensetzung Magnesiumsulfat (MgSO₄) enthält, vorzugsweise weniger als 5,0 Mol-% bezogen auf die Gesamtstoffmenge der Salzzusammensetzung, besonders bevorzugt zwischen 4,15 Mol-% und 4,35 Mol-%.

6. Aufzuchtanlage nach einem der Ansprüche 1 bis 4,
**dadurch gekennzeichnet,**
**dass** eine sulfatfreie Salzzusammensetzung zwischen 7,5 Mol-% und 12 Mol-% Magnesiumchlorid (MgCl₂) bezogen auf die Gesamtstoffmenge der Salzzusammensetzung enthält, vorzugsweise zwischen 9,0 und 10,0 Mol-%.

7. Aufzuchtanlage nach einem der Ansprüche 1 bis 5,
**dadurch gekennzeichnet,**
**dass** eine sulfatarme Salzzusammensetzung zwischen 4,0 Mol-% und 7,0 Mol-% Magnesiumchlorid (MgCl₂) bezogen auf die Gesamtstoffmenge der Salzzusammensetzung enthält, vorzugsweise zwischen 5,0 und 6,0 Mol-%.

8. Salzzusammensetzung zur Herstellung von Brack- oder Salzwasser für eine Anlage zur Aufzucht aquatischer Lebewesen, insbesondere zur Aufzucht von Fischen oder Krustentieren, die zwischen 70 Mol-% und 99,9 Mol-% Natriumchlorid (NaCl) und zwischen 0,1 Mol-% und 30 Mol-% Magnesiumchlorid (MgCl₂) jeweils bezogen auf die Gesamtstoffmenge der Salzzusammensetzung enthält, wobei die Salzzusammensetzung sulfatfrei oder zumindest sulfatarm ist,
**dadurch gekennzeichnet,**
**dass** die Salzzusammensetzung zwischen 0,20 Mol-% und 0,31 Mol-% Natriumbicarbonat (NaHCO₃) bezogen auf die Gesamtstoffmenge der Salzzusammensetzung enthält..

9. Brack- oder Salzwasser für eine Anlage zur Aufzucht aquatischer Lebewesen, insbesondere Fischen oder Krustentieren, das durch eine Salzzusammensetzung nach Anspruch 8 hergestellt ist.

10. Brack- oder Salzwasser nach Anspruch 9,
**dadurch gekennzeichnet,**
**dass** die Salinität des Brack- oder Salzwassers zwischen 0,10 % und 5 % beträgt, vorzugsweise zwischen 2,5 und 3,5 %.

11. Verfahren zur Herstellung von Brack- oder Salzwasser für eine Anlage zur Aufzucht von aquatischen Lebewesen nach einem der Ansprüche 1 bis 7,
**dadurch gekennzeichnet,**
**dass** eine Salzzusammensetzung nach Anspruch 8 in Süßwasser, insbesondere Leitungs-, Grund- oder Oberflächenwasser, eingebracht wird, wobei eine Salinität zwischen 1,0 % und 5,0 % eingestellt wird.

## Claims

1. Installation for farming aquatic organisms, in particular fish or crustaceans, which has a rearing tank containing saltwater or brackish water, wherein the saltwater or brackish water is produced using a salt composition that contains between 70 mol% and 99,9 mol% sodium chloride (NaCl) and between 0,1 mol% and 30 mol% magnesium chloride (MgCl₂), in each case in relation to the total amount of substance in the salt composition, wherein the salt composition is sulphate-free or has at least a low sulphate content,
**characterized in that**
the salt composition contains between 0,20 mol% and 0,31 mol% sodium bicarbonate (NaHCO₃) in relation to the total amount of substance in the salt composition.

2. Farming installation according to claim 1,
**characterized in that**
the salt composition contains potassium chloride (KCl), preferably less than 5 mol% in relation to the total amount of substance in the salt composition, in particular between 0,5 mol% and 4,0 mol%, particularly preferably between 1,5 mol% and 2,25 mol%.

3. Farming installation according to claim 1 or 2,
**characterized in that**
the salt composition contains calcium chloride (CaCl₂), preferably less than 5 mol% in relation to the total amount of substance in the salt composition, in particular between 0,5 mol% and 4 mol%, particularly preferably between 1,50 mol% and 2,25 mol%.

4. Farming installation according to any one of claims 1 to 3,
**characterized in that**
the salt composition contains sodium carbonate (Na₂CO₃), preferably up to 0,5 mol% in relation to the total amount of substance in the salt composition, in particular between 0,01 mol% and 0,15 mol%, particularly preferably 0,065 mol%.

5. Farming installation according to any one of claims 1 to 4,
**characterized in that**
a salt composition that has a low sulphate content contains magnesium sulphate (MgSO₄), preferably less than 5,0 mol% in relation to the total amount of substance in the salt composition, particularly preferably between 4,15 mol% and 4,35 mol%.

6. Farming installation according to any one of claims 1 to 4,
**characterized in that**
a sulphate-free salt composition contains between 7,5 mol% and 12 mol% magnesium chloride (MgCl₂) in relation to the total amount of substance in the salt composition, preferably between 9,0 and 10,0 mol%.

7. Farming installation according to any one of claims 1 to 5,
**characterized in that**
a salt composition that has a low sulphate content contains between 4,0 mol% and 7,0 mol% magnesium chloride (MgCl₂) in relation to the total amount of substance in the salt composition, preferably between 5,0 and 6,0 mol%.

8. Salt composition for producing brackish water or saltwater for an installation for farming aquatic organisms, in particular for farming fish or crustaceans, which contains between 70 mol% and 99,9 mol% sodium chloride (NaCl) and between 0,1 mol% and 30 mol% magnesium chloride (MgCl₂), in each case in relation to the total amount of substance in the salt composition, wherein the salt composition is sulphate-free or has at least a low sulphate content,
**characterized in that**
the salt composition contains between 0,20 mol% and 0,31 mol% sodium bicarbonate (NaHCO₃) in relation to the total amount of substance in the salt composition.

9. Brackish water or saltwater for an installation for farming aquatic organisms, in particular fish or crustaceans, which is produced by a salt composition according to claim 8.

10. Brackish water or saltwater according to claim 9,
**characterized in that**
the salinity of the brackish water or saltwater is between 0,10 % and 5 %, preferably between 2,5 % and 3,5 %.

11. Method for producing brackish water or saltwater for an installation for farming aquatic organisms according to any one of claims 1 to 7,
**characterized in that**
a salt composition according to claim 8 is added to fresh water, in particular tap water, groundwater or surface water, wherein a salinity of between 1,0 % and 5,0 % is set.

## Revendications

1. Installation d'élevage d'organismes aquatiques, en particulier de poissons ou de crustacés, qui présente un bassin d'élevage avec de l'eau salée ou de l'eau saumâtre, dans laquelle l'eau salée ou l'eau saumâtre est produite par une composition saline qui contient entre 70 % en moles et 99,9 % en moles de chlorure de sodium (NaCl) et entre 0,1 % en moles et 30 % en moles de chlorure de magnésium (MgCl₂), à chaque fois par rapport à la quantité de matière totale de la composition saline, dans laquelle la composition saline est exempte de sulfates ou présente au moins une faible teneur en sulfates,
**caractérisée en ce que**
la composition saline contient entre 0,20 % en moles et 0,31 % en moles de bicarbonate de sodium (NaHCO₃) par rapport à la quantité de matière totale de la composition saline.

2. Installation d'élevage selon la revendication 1,
**caractérisée en ce que**
la composition saline contient du chlorure de potassium (KCl), de préférence moins de 5 % en moles par rapport à la quantité de matière totale de la composition saline, en particulier entre 0,5 % en moles et 4,0 % en moles, de manière particulièrement préférée entre 1,5 % en moles et 2,25 % en moles.

3. Installation d'élevage selon la revendication 1 ou 2,
**caractérisée en ce que**
la composition saline contient du chlorure de calcium (CaCl₂), de préférence moins de 5 % en moles par rapport à la quantité de matière totale de la composition saline, en particulier entre 0,5 % en moles et 4 % en moles, de manière particulièrement préférée entre 1,50 % en moles et 2,25 % en moles.

4. Installation d'élevage selon l'une des revendications 1 à 3,
**caractérisée en ce que**
la composition saline contient du carbonate de sodium (Na₂CO₃), de préférence jusqu'à 0,5 % en moles par rapport à la quantité de matière totale de la composition saline, en particulier entre 0,01 % en moles et 0,15 % en moles, de manière particulièrement préférée 0,065 % en moles.

5. Installation d'élevage selon l'une des revendications 1 à 4,
**caractérisée en ce qu'**
une composition saline présentant une faible teneur en sulfates contient du sulfate de magnésium (MgSO₄), de préférence moins de 5,0 % en moles par rapport à la quantité de matière totale de la composition saline, de manière particulièrement préférée entre 4,15 % en moles et 4,35 % en moles.

6. Installation d'élevage selon l'une des revendications 1 à 4,
**caractérisée en ce qu'**
une composition saline exempte de sulfates contient entre 7,5 % en moles et 12 % en moles de chlorure de magnésium (MgCl₂) par rapport à la quantité de matière totale de la composition saline, de préférence entre 9,0 et 10,0 % en moles.

7. Installation d'élevage selon l'une des revendications 1 à 5,
**caractérisée en ce qu'**
une composition saline présentant une faible teneur en sulfates contient entre 4,0 % en moles et 7,0 % en moles de chlorure de magnésium (MgCl₂) par rapport à la quantité de matière totale de la composition saline, de préférence entre 5,0 et 6,0 % en moles.

8. Composition saline pour la production d'eau saumâtre ou d'eau salée pour une installation d'élevage d'organismes aquatiques, en particulier pour l'élevage de poissons ou de crustacés, qui contient entre 70 % en moles et 99,9 % en moles de chlorure de sodium (NaCl) et entre 0,1 % en moles et 30 % en moles de chlorure de magnésium (MgCl₂), à chaque fois par rapport à la quantité de matière totale de la composition saline, dans laquelle la composition saline est exempte de sulfates ou présente au moins une faible teneur en sulfates,
**caractérisée en ce que**
la composition saline contient entre 0,20 % en moles et 0,31 % en moles de bicarbonate de sodium (NaHCO₃) par rapport à la quantité de matière totale de la composition saline.

9. Eau saumâtre ou eau salée pour une installation d'élevage d'organismes aquatiques, en particulier de poissons ou de crustacés, qui est produite par une composition saline selon la revendication 8.

10. Eau saumâtre ou eau salée selon la revendication 9,
**caractérisée en ce que**
la salinité de l'eau saumâtre ou de l'eau salée est comprise entre 0,10 % et 5 %, de préférence entre 2,5 % et 3,5 %.

11. Procédé de production d'eau saumâtre ou d'eau salée pour une installation d'élevage d'organismes aquatiques selon l'une des revendications 1 à 7,
**caractérisé en ce qu'**
une composition saline selon la revendication 8 est ajoutée à l'eau douce, en particulier de l'eau du robinet, de l'eau souterraine ou de l'eau de surface, une salinité comprise entre 1,0 % et 5,0 % étant réglée.
